# EUROPÄISCHE PATENTANMELDUNG

(11) **EP 3 098 421 A2**
(43) Veröffentlichungstag der Anmeldung: **30.11.2016**
(21) Anmeldenummer: 15184196.2
(22) Anmeldetag: 08.09.2015
(51) Int. Cl.: F02D 19/12, F02M 25/14, F02M 25/022, F02D 41/14, F02D 41/22, F02D 41/40, F02D 41/30, F02P 5/15

(54) **BETREIBEN EINES VERBRENNUNGSMOTORS MIT MODELLIERUNG UND REGELUNG EINER FLUIDBEIMISCHUNG IN EINEM KRAFTSTOFFSYSTEM**

(30) Priorität: 04.11.2014 DE 102014222462
(71) Anmelder: Bayerische Motoren Werke Aktiengesellschaft, 80809 München (DE)
(72) Erfinder: Böhm, Martin, 82343 Pöcking (DE); Schmaderer, Sebastian, 80935 München (DE)

(57) **Zusammenfassung**

Bei einem Verfahren zum Betreiben eines Verbrennungsmotors mit wenigstens einem Zylinder (30) wird ein vorbestimmbares Volumen eines Fluids zu einem Kraftstoff beigemischt und das Fluid-Kraftstoffgemisch wird in ein Kraftstoffsystem (50) eingeleitet. Eine Steuervorrichtung (60) betrachtet das Kraftstoffsystem (50) als zumindest abschnittsweise in eine Mehrzahl virtueller Segmente (55, 56) mit vorbestimmtem Volumen unterteilt, wobei die Steuervorrichtung (60) eine Befüllung des Kraftstoffsystems (50) mit dem Fluid-Kraftstoffgemisch als eine sukzessive Befüllung der Segmente (55, 56) erfasst, ein Mischungsverhältnis des Fluid-Kraftstoffgemisches für jedes Segment (55, 56) speichert, und die Einspritzung des Fluid-Kraftstoffgemisches in den wenigstens einen Zylinder (30) zumindest in Abhängigkeit des gespeicherten Mischungsverhältnisses steuert.

## Beschreibung

Die Erfindung betrifft ein Verfahren zum Betreiben eines Verbrennungsmotors, wobei dem Kraftstoff in dem Kraftstoffsystem ein Fluid beigemischt wird.

In Verbrennungsmotoren, beispielsweise bei Ottomotoren, insbesondere bei hoch aufgeladenen Ottomotoren, kann es zu einer klopfenden Verbrennung kommen. Dies kann zu einer Leistungsreduktion und geringerem Wirkungsgrad bei der Verbrennung führen. Im Extremfall kann dies sogar zu Bauteilbeschädigungen führen.

Um dem Klopfen entgegenzuwirken oder vorzubeugen, ist es bekannt, den Zündwinkel des Zylinders nach spät zu verschieben. Dadurch verschlechtert sich jedoch der Wirkungsgrad der Verbrennung, und die Abgastemperatur steigt an. Um der höheren Wärmebelastung des Abgassystems entgegenzuwirken, muss im Bedarfsfall das in den Zylinder eingespritzte Luft-Kraftstoff-Gemisch angefettet, also mit höherem Kraftstoffanteil versehen werden. Dadurch können die Abgassystemkomponenten gekühlt werden. Damit kann sich jedoch auch der Kraftstoffverbrauch, die Leistung, die Emission und der Kühlleistungsbedarf verschlechtern.

Wird die Abgastemperatur nicht reduziert, so kann sich auch die Ansauglufttemperatur erhöhen, wenn das Abgas der Ansaugluft wieder zugeführt wird. Die Ansaugluft wird insbesondere bei hoch aufgeladenen Motoren durch den Verdichter der Aufladung weiter erhitzt. Eine höhere Ansauglufttemperatur erhöht wiederum die Klopfneigung. Zudem können zu hohe Bauteiltemperaturen zu Schäden und erhöhtem Verschleiß führen.

Um die Klopfneigung zu reduzieren, kann dem Kraftstoff ein Fluid, beispielsweise Wasser, beigemischt werden. Das Fluid wird in dem Zylinder stark erhitzt und verdampft schließlich. Dabei entzieht es der Umgebung Energie und kühlt diese ab. Dadurch wird die Klopfneigung reduziert, der Zündwinkel kann in Richtung früh verstellt werden, und Kraftstoffverbrauch und Leistung des Motors können verbessert werden.

Um eine optimale Verbrennungscharakteristik zu gewährleisten, die den jeweiligen aktuellen Anforderungen angepasst werden müssen, ist es jedoch wichtig, zu jedem Zeitpunkt die Fluidmenge zu kennen, die zusammen mit dem Kraftstoff in die Zylinder eingespritzt wird. In gängigen Verfahren lässt sich jedoch ein Zeitpunkt, wann eine bestimmte Menge des Fluids an einem Injektor oder an der Hochdruckpumpe des Kraftstoffsystems anliegt, nicht exakt bestimmen. Daher kann auch eine Menge des tatsächlich in den Zylinder injizierten Fluids nicht exakt bestimmt werden. Bekannt ist lediglich die Fluidmenge, die in einem von dem Zylinder entfernten Ort in den Kraftstoff injiziert wurde. Daher lassen sich in den bekannten Systemen bestenfalls Schätzungen abgeben, wie groß die dem Zylinder zugeführte Fluidmenge tatsächlich ist. Insbesondere in einem Fall, in dem feuchte oder angefeuchtete Ansaugluft als Verbrennungsluft verwendet wird, ist dies jedoch unzureichend, da eine zu große oder zu geringe Fluidmenge eingespritzt werden könnte. Eine Überwachung oder eine Regelung der Zumessung der Fluidmenge ist bislang ebenfalls nicht möglich.

Es ist daher die Aufgabe der Erfindung, ein Verfahren und eine Vorrichtung bereitzustellen, die eine Fluidbeimischung zu einem Kraftstoff zuverlässig ermöglichen und eine Überwachung des mit dem Kraftstoff injizierten Fluids erlauben.

Die Aufgabe wird gelöst durch ein Verfahren gemäß Anspruch 1 sowie eine Vorrichtung gemäß Anspruch 10. Vorteilhafte Weiterbildungen sind Gegenstand der Unteransprüche.

In einem erfindungsgemäßen Verfahren zum Betreiben eines Verbrennungsmotors mit wenigstens einem Zylinder wird einem Kraftstoff ein vorbestimmbares Volumen eines Fluids beigemischt. Das Fluid-Kraftstoffgemisch wird dann in ein Kraftstoffsystem eingeleitet. Eine Steuervorrichtung unterteilt das Kraftstoffsystem zumindest abschnittsweise in eine Mehrzahl virtueller Segmente mit vorbestimmtem Volumen, wobei die Steuervorrichtung eine Befüllung des Kraftstoffsystems mit dem Fluid-Kraftstoffgemisch als eine sukzessive Befüllung der Segmente erfasst.

Auf diese Weise kann genau erfasst, modelliert und/oder abgebildet werden, in welchem Segment des Kraftstoffsystems sich welche Fluid-Kraftstoffmischung befindet. Auch kann, indem eine Verbrauchsrate an Kraftstoff pro Zylinder bestimmt wird, exakt gesteuert werden, welchem Zylinder welche Fluidmenge zugeführt wird.

Auf diese Weise kann insbesondere auch die Steuerung der Einspritzparameter, der Zündwinkel des individuellen Zylinders oder alter Zylinder und/oder weitere Parameter, wie zusätzliche Fluidzugabe über die Ansaugluft oder ähnliches, verbessert werden. Dies kann eine Effizienz des Verbrennungsmotors verbessern, den Verschleiß reduzieren, indem einer Klopfneigung entgegengesteuert wird, und den Wirkungsgrad des Verbrennungsmotors erhöhen.

Die Steuervorrichtung kann einen Fluidinjektor, insbesondere ein Dosierventil ansteuern, um dem Kraftstoff das vorbestimmte Volumen des Fluids, vorzugsweise mit einem vorbestimmbaren Druck und/oder in einem vorbestimmbaren Zeitraum, beizumischen. Indem eine Befüllung des Kraftstoffsystems exakt in der Steuervorrichtung abgebildet wird, ist zu jedem Zeitpunkt bekannt, weiches Fluid-Kraftstoffgemisch in welchem der virtuellen Segmente des Kraftstoffsystems vorliegt. Muss hier eine Anpassung erfolgen, beispielsweise aufgrund der Klopfneigung eines Zylinders, so kann durch gezielte Ansteuerung des Dosierventils eine derartige Fluidmenge zu einem Zeitpunkt in den Kraftstoff injiziert werden, dass sichergestellt ist, dass dieses spezielle Fluid-Kraftstoffgemisch dem gewünschten Zylinder zugeliefert wird. Das bedeutet, die Ansteuerung des Dosierventils kann speziell auf die individuellen Notwendigkeiten einzelner Zylinder abgestimmt werden.

Wird dabei mit einem hohen Druck eingespritzt, kann ein kleines Kraftstoffvolumen, eventuell auch nur das Kraftstoffvolumen eines vorbestimmten Segments des Kraftstoffsystems, mit einer vorbestimmten Fluidmenge vermischt werden. Auf diese Weise kann eine bestimmte Fluid-Kraftstoffmischung an einen vorbestimmten Zylinder geliefert werden. Durch kontinuierliche Abgabe über einen längeren Zeitraum, mit geringem oder mit hohem Druck, kann das Mischungsverhältnis mit Fluid in dem Kraftstoff für das gesamte Kraftstoffsystem geändert werden.

Natürlich ist es im Rahmen der Erfindung auch möglich, eine genaue Ansteuerung von Druck und Injektionszeit des Fluids durch das Dosierventil vorzunehmen. Diese gezielte Ansteuerung des Dosierventils in Verbindung mit der genauen Abbildung des Kraftstoffsystems in der Steuervorrichtung ermöglicht damit eine Erhöhung der Freiheitsgrade, um den Verbrennungsmotor anzusteuern und zu optimieren. Wie später noch zu betrachten ist, kann dies auch eine Plausibilisierung und eine Überwachung des Dosierventils ermöglichen.

Das Kraftstoffsystem kann durch die Steuervorrichtung zumindest zwischen einer Einleitstelle des Fluids und einer Injektionsstelle des Fluids in den Zylinder in die virtuellen Segmente unterteilt sein. Auf diese Weise kann der Bereich, in dem ein Gemisch aus Fluid und Kraftstoff vorliegt, optimal abgebildet und überwacht werden. Dadurch wird es möglich, den Transport des Gemisches bis hin zu dem individuellen Zylinder zu modellieren. Dies kann eine genauere Vorhersage des Fluidbedarfs zu bestimmten Zeitpunkten erlauben. Auf diese Weise kann auch eine exakte Zulieferung von Fluid an die Injektoren, also in die Zylinder, durchgeführt und in der Steuervorrichtung bei der Steuerung der Kraftstoffförderung berücksichtigt werden. Auch kann dadurch eine Steuerung einer Hochdruckpumpe für den Kraftstoff auf das tatsächlich anliegende Fluid-Kraftstoffgemisch abgestimmt werden.

Es ist zu beachten, dass die virtuellen Segmente in ihren abgebildeten Volumina identisch, in Teilbereichen des Kraftstoffsystems identisch oder unterschiedlich sein können. In bevorzugten Ausführungen der Erfindung sind die virtuellen Segmente gleich groß; sie bilden also ein jeweils gleiches Volumen des Gemisches von Kraftstoff und Fluid ab. In weiter bevorzugten Ausführungen kann ein derartiges virtuelles Segment insbesondere einem Volumen entsprechen, das typischerweise in einen Zylinder injiziert wird. Auch ist denkbar, dass das Volumen eines Segments ein Vielfaches des Volumens ist, das typischerweise in einen Zylinder eingespritzt wird. Auf diese Weise kann genauer vorhergesagt werden, über wie viele Zyklen des Zylinders ein bestimmtes Fluid-Kraftstoffgemisch dem Zylinder noch zugeführt wird oder werden muss, ehe ein verändertes Fluid-Kraftstoffgemisch bei dem Zylinder angekommen ist, um injiziert zu werden. Dies kann eine bessere Motorsteuerung erlauben. Natürlich ist es auch vorstellbar, dass die Segmente abhängig von den tatsächlichen Gegebenheiten in der Steuervorrichtung umdefiniert werden, also beispielsweise größere oder kleinere Volumina umfassen.

Jedem Segment des Kraftstoffsystems kann in der Steuervorrichtung ein Integrator zugeordnet sein, der den Füllstand des ihm zugeordneten Segments repräsentiert. Dies erlaubt es, eine vereinfachte Modellierung der Befüllung des Kraftstoffsystems vorzunehmen. Insbesondere kann eine Abfrage über die jeweiligen Füllstände in dem Kraftstoffsystem leicht erfolgen. Zudem ist auf diese Weise eine vereinfachte Analyse des Kraftstoffsystems, beispielsweise beim Auftreten von Fehlfunktionen, möglich, und Fehlerquellen können möglicherweise schneller identifiziert werden. Des Weiteren kann die Darstellung der Befüllung mittels der Integratoren Segmente verschiedener Größe leicht abbilden und modellieren. Dies kann es ermöglichen, die von der Steuervorrichtung zur Verfügung zu stellenden Kapazitäten zu reduzieren.

Die Steuervorrichtung kann ein Speichermittel aufweisen. Dabei kann der Füllstand jedes Segments bzw. jedes Integrators in dem Speichermittel gespeichert werden. Auf diese Weise kann der gesamte Befüllungsprozess des Kraftstoffsystems, über einen kurzen oder wahlweise über einen längeren Zeitraum, dokumentiert werden. Ein kurzer Zeitraum kann dabei eine Zeit von einem oder mehreren Zyklen des Verbrennungsmotors umfassen. Ein längerer Zeitraum kann ein Zeitraum sein, indem der Verbrennungsmotor eine Vielzahl von Zyklen durchlaufen hat, beispielsweise mehrere Minuten. Dies erlaubt es wiederum, eine genaue Analyse des Kraftstoffsystems und dessen Befüllung durchzuführen, insbesondere auch bei der Suche nach Fehlerquellen im Falle einer Fehlfunktion.

Das Mischungsverhältnis des Fluid-Kraftstoffgemisches jedes mit Fluid-Kraftstoffgemisch befüllten Segments kann in dem Speichermittel gespeichert wird. Dies kann es weiter erlauben, eine Plausibilisierung von Verbrennungsparametern etc. vorzunehmen. Auch kann nach einem Abstellen des Verbrennungsmotors bei einem Neustart oder für einen Spülprozess des Kraftstoffsystems auf die in dem Speichermittel hinterlegten Daten zugegriffen werden, und es können entsprechende Maßnahmen abhängig von der Fluid-Kraftstoffmischung getroffen werden, um eine möglichst Motor-schonende Vorgehensweise für den Neustart zu identifizieren.

Vorteilhafterweise kann in der Steuervorrichtung ein in einen Zylinder eines Verbrennungsmotors zu injizierendes Volumen des Fluid-Kraftstoffgemisches und/oder ein Zeitpunkt der Injektion des Fluid-Kraftstoffgemisches zumindest in Abhängigkeit des in dem Speichermittel gespeicherten Mischungsverhältnisses des Fluid-Kraftstoffgemisches bestimmt werden. Dies erlaubt eine weitere Verbesserung der Verbrennungseigenschaften des Motors durch eine genauere Einstellung der Steuerparameter des Zylinders. Zudem kann auf diese Weise eine leichte Koordination verschiedener Komponenten basierend auf einem fest hinterlegten Datensatz erfolgen, wie zum Beispiel die Hinzugabe von Verbrennungsluft, die gegebenenfalls abzukühlen oder anzufeuchten oder auf andere Weise zu konditionieren ist.

Weiter kann eine Bestimmung des zu injizierenden Fluid-Kraftstoffgemisches für jeden Zylinder eines Verbrennungsmotors individuell bestimmt werden. Dies wird erfindungsgemäß dadurch ermöglicht, dass durch die bekannte Fluidkonzentration in den einzelnen Segmenten und durch die genau definierte Kraftstoffinjektion in den jeweiligen Zylinder, bereits vor einer Injektion durch gezielte Befüllung eines virtuellen Segments, das Fluid-Kraftstoffgemisch definiert werden kann, das zu einem vorbestimmten Zeitpunkt an einem vorbestimmten Zylinder anliegt. Dies ermöglicht zudem eine entsprechende Ansteuerung einer Hochdruckpumpe des Kraftstoffsystems und der jeweiligen Injektoren (Aktoren) zum Einspritzen in den Zylinder, zur gezielten Lieferung der vorbestimmten Gemische.

In einigen Ausführungen der Erfindung wird in der Steuervorrichtung ein Ist-Luftzahlwert der Abgasluft nach einer Verbrennung von Kraftstoff-Fluid-Gemisch in dem Zylinder mit einem Sensor erfasst. Dieser Ist-Wert wird mit einem vorbestimmten Soll-Luftzahlwert verglichen, wobei zumindest in dem Fall eines vorbestimmten Abweichens zwischen Ist- und Soll-Luftzahl in der Steuervorrichtung ein Fehlerprotokoll durchgeführt und/oder eine Fehlermeldung ausgegeben und/oder ein regulierendes Steuersignal ausgegeben wird. Eine vorbestimmte Abweichung kann in diesem Fall eine übliche Abweichung der Werte voneinander sein, die in Fachkreisen als eine Fehlfunktion angesehen wird. Diese kann im Prozent-Bereich liegen, beispielsweise eine Abweichung von 10% oder mehr des Ist-Wertes von dem Soll-Wert. Die Abweichung kann bei besonders empfindlichen Parametern jedoch auch im Promille Bereich, also kleiner als 1 % liegen.

Da der Wert der Luftzahl einen Rückschluss auf die Verbrennung und damit auch auf das der Verbrennung zu Grunde liegende Kraftstoffgemisch gibt, kann auf diese Weise auch eine Plausibilisierung durchgeführt werden, ob das Dosierventil zum Injizieren von Fluid in den Kraftstoff ordnungsgemäß funktioniert. Die Ansteuerung des Dosierventils bestimmt die Menge des Fluids in dem Kraftstoff. Dies bedeutet, ein Druck und eine Zeitdauer der Injektion des Fluids in den Kraftstoff hat einen direkten Einfluss auf die Verbrennung des Fluid-Kraftstoffgemische, das in dem jeweils befüllten Segment vorliegt. Eine Messung der Luftzahl in einem Zeitbereich vor und in einem Zeitbereich nach dem Einspritzen eines bestimmten Kraftstoffvolumens mit bekannter Fluidkonzentration, auch unter Berücksichtigung eines Lambdareglers, erlaubt eine genaue Bestimmung der Abweichung der Luftzahl. Dies kann beispielsweise durch Auswertung der Summe der Abweichung von Soll-Luftzahl und Ist-Luftzahl und dem Lambdaregler (mit Adaption) vor und nach der Verbrennung des bestimmten Fluid-Kraftstoffgemischs erfolgen. Treten hier große Abweichungen auf, so kann beispielsweise auf eine Fehlfunktion des Dosierventils geschlossen werden.

Ein Fehlerprotokoll kann dabei die Meldung des Fehlers an die Steuervorrichtung, an einen Betreiber des Verbrennungsmotors, beispielsweise durch visuelle oder akustische Signale, oder an ein extern angeschlossenes Gerät beinhalten. Zudem können Steuerbefehle ausgegeben werden, die eine Beschädigung des Verbrennungsmotors vermeiden, bis hin zu einer NotAbschaltung, falls notwendig. Auch können die Förderpumpen zum Fördern des Kraftstoffs und des Fluids an die Fehlfunktion des Dosierventils angepasst werden, um den Fehler zu kompensieren und die Funktion des Verbrennungsmotors so weit möglich aufrecht zu erhalten.

Ein weiterer Aspekt der Erfindung betrifft einen Fahrzeugmotor mit einer Steuervorrichtung, die ausgebildet ist, das Verfahren zum Spülen des Kraftstoffsystems durchzuführen.

Ein weiterer Aspekt der Erfindung betrifft ein Kraftstoffsystem eines Verbrennungsmotors mit wenigstens einem Zylinder und mit einer Steuervorrichtung, die ausgebildet ist, das Kraftstoffsystem zumindest abschnittsweise in virtuelle Segmente zu unterteilen, einer Kraftstoffpumpe und einem Fluidinjektor, der vorzugsweise als ein Dosierventil ausgebildet ist. Der Fluidinjektor injiziert eine vorbestimmte Menge eines Fluids in den Kraftstoff. Die Injektion erfolgt über einen vorbestimmten Zeitraum und/oder mit einem vorbestimmten Druck. Das Fluid-Kraftstoffgemisch wird mittels der Kraftstoffpumpe durch das Kraftstoffsystem zu dem wenigstens einen Zylinder gepumpt. Die Steuervorrichtung ist dabei dazu ausgebildet, die Befüllung des Kraftstoffsystems mit dem Fluid-Kraftstoffgemisch als eine sukzessive Befüllung der virtuellen Segmente zu erfassen. Wie bereits oben beschrieben, wird auf diese Weise ermöglicht, eine Befüllung und eine Modellierung eines Kraftstoffsystems exakter durchzuführen. So kann ein Fluid-Kraftstoffgemisch mit bestimmtem Mischungsverhältnisse gezielt an vorbestimmte Zylinder geliefert werden. Dies kann wesentliche Verbesserungen des Verbrennungsprozesses in dem Zylinder, eine Reduzierung des Verschleißes, eine bessere Kontrolle über die Verbrennungstemperatur, eine Reduzierung der Emissionen etc. ermöglichen.

Weitere Vorteile und Merkmale finden sich in der nachfolgenden Beschreibung in Verbindung mit den beigefügten Figuren. In diesen zeigen:
- Figur 1 eine schematische Ansicht eines Fluidinjektorsystems für einen Verbrennungsmotor gemäß einer Ausführungsform der Erfindung;
- Figur 2 eine schematische Ansicht eines Teils eines Kraftstoffsystems gemäß einer Ausführungsform der Erfindung.

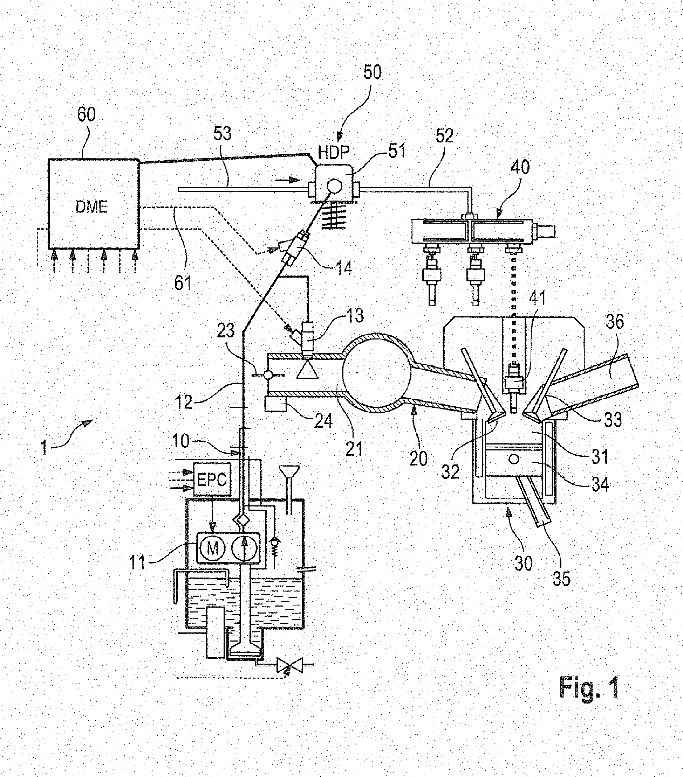

Figur 1 zeigt eine schematische Zeichnung eines Fluidinjektorsystems 1. Das Fluidinjektorsystem 1 weist ein Fluidsystem 10 auf. Das Fluidsystem 10 umfasst eine Fluidpumpe 11. Das Fluid ist in dem Fluidsystem 10 mit einem Druck beaufschlagt, mit dem es in ein Kraftstoffsystem 50 oder, in manchen Ausführungsformen zusätzlich, über ein Luftansaugsystem 20 in einen Zylinder 30 injiziert wird.

Das Fluid wird dazu in dem Fluidsystem 10 durch eine Fluidleitung 12 zu einem Fluidinjektor 13 geleitet. Der Fluidinjektor 13 kann insbesondere als ein Drosselventil ausgebildet sein. Der Fluidinjektor 13 verbindet in der in Figur 1 gezeigten Ausführungsform das Fluidsystem 10 mit einem Ansaugrohr 21 des Ansäugsystems 20 des Zylinders 30.

Zudem weist das Fluidsystem 10 einen weiteren Fluidinjektor auf, der hier als Dosierventil 14 ausgebildet ist. Das Dosierventil 14 verbindet das Fluidsystem 10 mit dem Kraftstoffsystem 50. Dadurch kann Fluid von dem Fluidsystem 10 direkt in den Kraftstoff der Brennkraftmaschine injiziert werden.

Das Fluidinjektorsystem 1 weist zudem eine Steuervorrichtung 60 auf. Die Steuervorrichtung 60, die insbesondere die digitale Motorelektronik beinhaltet oder darstellt, ist über Steuerleitungen 61 mit dem Dosierventil 14 verbunden. Des Weiteren ist die Steuervorrichtung 60 mit einer Hochdruckpumpe 51 des Kraftstoffsystems 50 verbunden. Auf diese Weise kann eine Kraftstoffzufuhr über eine Kraftstoffleitung 53 und eine Beimischung von Fluid durch das Dosierventil 14 gesteuert werden, und ein Fluid-Kraftstoffgemisch kann über eine Zuleitung 52 zu einer Mehrzahl von Kraftstoffinjektoren 41 geliefert werden. Die Kraftstoffinjektoren 41 sind in der gezeigten Ausführungsform Teil einer Railvorrichtung 40, wie sie dem Fachmann hinlänglich bekannt ist. Dabei sind die Volumina der Kraftstoffleitung 52, der Railvorrichtung 40 sowie der einzelnen Kraftstoffinjektoren 41 bekannt bzw. in der Steuervorrichtung 60 hinterlegt.

Jeder der Kraftstoffinjektoren 41 injiziert das Fluid-Kraftstoffgemisch in einen Zylinder 30. Der Zylinder 30 ist vorliegend ein Zylinder für einen Vier-Taktbetrieb der Brennkraftmaschine, mit dem ein Kolben 34 über ein Pleuel 35 eine nicht gezeigte Kurbelwelle antreibt. Weitere Bauteile wie ein Einlassventil 32, durch das ein Verbrennungsraum 31 mit dem Ansaugsystem 20 in Verbindung gebracht werden kann, ein Auslassventil 33 und eine Abgasleitung 36 sind allgemein bekannt und werden nicht weiter beschrieben.

Durch das erfindungsgemäße Verfahren wird in dem zweiten Takt jeweils ein vorbestimmbares Volumen des Fluid-Kraftstoffgemisches in den Zylinder 30 injiziert. Die Konzentration des Fluids in diesem Gemisch ist bekannt, so dass eine genau definierte Menge Fluid in den Zylinder 30 eingespritzt werden kann. Falls notwendig, kann dann weiteres Fluid beispielsweise der Ansaugluft beigemischt werden, um eine Fluidmenge in dem Zylinder 30 anzupassen. Auch kann ein Zündwinkel verstellt werden, falls die an dem Injektor 41 anliegende Fluid-Menge von einer tatsächlich benötigten Fluidmenge abweicht.

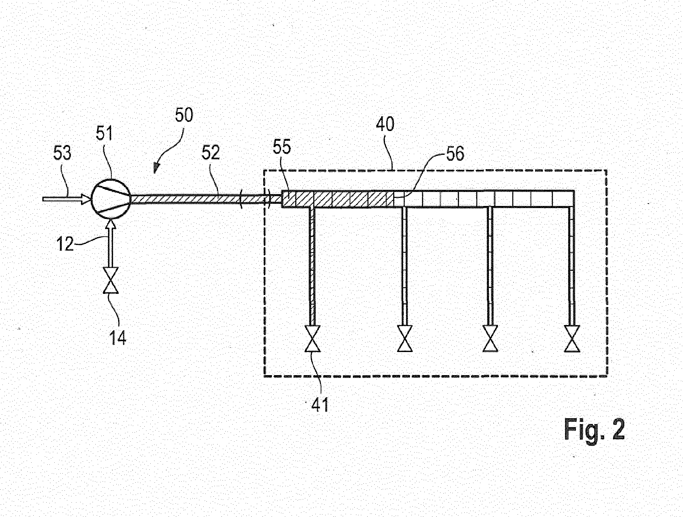

Figur 2 zeigt eine schematische Ansicht eines Teils eines Kraftstoffsystems. Selbe Bezugszeichen kennzeichnen selbe oder ähnliche Bauteile, wobei deren Beschreibung nicht wiederholt wird.

In der in Figur 2 gezeigten Ausführung der Erfindung ist ein Kraftstoffsystem 50 zwischen der Hochdruckpumpe 51 und den Injektoren 41 einer Railvorrichtung 40 als eine Vielzahl Segmente 55 abgebildet. In der in Figur 2 gezeigten Ausführungsform weisen die Segmente verschiedene Größen auf. In anderen Ausführungsformen kann die Größe der Segmente jedoch auch identisch sein.

Die Segmente 55 werden in der Steuervorrichtung in bevorzugten Ausführungen durch Integratoren abgebildet bzw. modelliert. Eine Befüllung eines Segments gilt als abgeschlossen, wenn der entsprechende Integrator einen Volumendurchsatz von Fluid-Kraftstoffgemisch erfasst hat, der dem Volumen des jeweiligen Segments entspricht. Ist ein Segment befüllt, wie beispielsweise das in Figur 2 dargestellte Segmente 55, wird der Integrator des nächsten Feldes gestartet. Auf diese Weise wird die sukzessive Befüllung des Kraftstoffsystems mit einem bestimmten Fluid-Kraftstoffgemisch erfasst und in der Steuervorrichtung 60 abgebildet. Dies erlaubt eine Modellierung des Kraftstoffsystems 50 und der Kraftstoffzuführung zu den Zylindern 30 eines Verbrennungsmotors. Das in dem jeweiligen Segment befindliche Gemisch kann mit der Befüllungsinformation des Integrators in der Steuervorrichtung 60 hinterlegt werden. Auf diese Weise ist zu jedem Zeitpunkt die konkrete Befüllung eines Integrators, auch durch verschiedenartige. Fluid-Kraftstoffgemische, bekannt. Ein derartig nur teilweise befülltes Segment ist in der Figur 2 mit dem Bezugszeichen 56 gekennzeichnet.

Aus der Figur 2 wird auch die sukzessive Befüllung der Segmente in einer vorbestimmten Reihenfolge nacheinander erkennbar. Dies erlaubt es, die Fluidmenge an einem bestimmten Ort in dem Kraftstoffsystem 50 zu einem beliebigen Zeitpunkt zu bestimmen, insbesondere an einem Injektor 41 unmittelbar bevor das Gemisch in den Zylinder 30 eingespritzt wird.

## Patentansprüche

1. Verfahren zum Betreiben eines Verbrennungsmotors mit wenigstens einem Zylinder (30), das die Schritte aufweist:
- Beimischen eines vorbestimmbaren Volumens eines Fluids zu einem Kraftstoff;
- Einleiten des Fluid-Kraftstoffgemisches in ein Kraftstoffsystem (50),
- wobei eine Steuervorrichtung (60) das Kraftstoffsystem (50) zumindest abschnittsweise in eine Mehrzahl virtueller Segmente (55, 56) mit vorbestimmtem Volumen unterteilt und wobei die Steuervorrichtung (60) eine Befüllung des Kraftstoffsystems (50) mit dem Fluid-Kraftstoffgemisch als eine sukzessive Befüllung der Segmente (55, 56) erfasst.

2. Verfahren nach Anspruch 1, wobei die Steuervorrichtung (60) einen Fluidinjektor (14) ansteuert, das vorbestimmte Volumen des Fluids, vorzugsweise mit einem vorbestimmbaren Druck und/oder in einem vorbestimmbaren Zeitraum, dem Kraftstoff beizumischen.

3. Verfahren nach einem der vorhergehenden Ansprüche, wobei das Kraftstoffsystem (50) durch die Steuervorrichtung (60) zumindest zwischen einer Einleitstelle des Fluids und einer Injektionsstelle des Fluids in den Zylinder (30) in die virtuellen Segmente (55, 56) unterteilt wird.

4. Verfahren nach einem der vorhergehenden Ansprüche, wobei jedem Segment des Kraftstoffsystems (50) in der Steuervorrichtung (60) ein Integrator zugeordnet ist, der den Füllstand des ihm zugeordneten Segments (55, 56) repräsentiert.

5. Verfahren nach einem der vorhergehenden Ansprüche, wobei die Steuervorrichtung (60) ein Speichermittel aufweist, und wobei der Füllstand jedes Segments (55, 56) bzw. jedes Integrators in dem Speichermittel gespeichert wird.

6. Verfahren nach einem der vorhergehenden Ansprüche, wobei das Mischungsverhältnis des Fluid-Kraftstoffgemisches jedes mit Fluid-Kraftstoffgemisch befüllten Segments (55, 56) in dem Speichermittel gespeichert wird.

7. Verfahren nach einem der vorhergehenden Ansprüche, wobei in der Steuervorrichtung (60) ein in einen Zylinder (30) eines Verbrennungsmotors zu injizierendes Volumen des Fluid-Kraftstoffgemisches und/oder ein Zeitpunkt der Injektion des Fluid-Kraftstoffgemisches zumindest in Abhängigkeit des in dem Speichermittel gespeicherten Mischungsverhältnisses des Fluid-Kraftstoffgemisches bestimmt wird.

8. Verfahren nach Anspruch 7, wobei eine Bestimmung des zu injizierenden Fluid-Kraftstoffgemisches für jeden Zylinder eines Verbrennungsmotors individuell bestimmt wird.

9. Verfahren nach einem der vorhergehenden Ansprüche, wobei die Steuervorrichtung (60) einen Ist-Luftzahlwert der Abgasluft nach einer Verbrennung von Fluid-Kraftstoffgemisch in dem Zylinder (30) mit einem Sensor erfasst und mit einem vorbestimmten Soll-Luftzahlwert vergleicht, wobei zumindest in dem Fall eines vorbestimmten Abweichens zwischen Ist- und Soll-Luftzahl in der Steuervorrichtung (60) ein Fehlerprotokoll durchgeführt und/oder eine Fehlermeldung ausgegeben und/oder ein regulierendes Steuersignal ausgegeben wird.

10. Kraftstoffsystem eines Verbrennungsmotors mit wenigstens einem Zylinder (30) mit
- einer Steuervorrichtung (60), die ausgebildet ist, das Kraftstoffsystem (50) zumindest abschnittsweise in virtuelle Segmente (55, 56) zu unterteilen,
- einer Kraftstoffpumpe (51) und
- einem Fluidinjektor (14),
wobei der Fluidinjektor (14) eine vorbestimmte Menge eines Fluids in den Kraftstoff injiziert und das Fluid-Kraftstoffgemisch mittels der Kraftstoffpumpe (51) durch das Kraftstoffsystem (50) zu dem wenigstens einen Zylinder (30) gepumpt wird, wobei die Steuervorrichtung (60) des Weiteren ausgebildet, die Befüllung des Kraftstoffsystems (50) mit dem Fluid-Kraftstoffgemisch als eine sukzessive Befüllung der virtuellen Segmente (55, 56) zu erfassen.
